# FASCICULE DE BREVET EUROPEEN

(11) **EP 1 165 661 B1**
(45) Date de publication et mention de la délivrance du brevet: **04.02.2004**
(21) Numéro de dépôt: 00914250.6
(22) Date de dépôt: 24.03.2000
(51) Int. Cl.: C08G 69/18, C08G 69/20, C08J 5/04, C08K 7/02

(54) **PROCEDE DE POLYMERISATION ANIONIQUE DE LACTAMES**
VERFAHREN ZUR ANIONISCHEN LACTAMPOLYMERISATION
METHOD FOR ANIONIC POLYMERIZATION OF LACTAMES

(30) Priorité: 26.03.1999 FR 9904118
(43) Date de publication de la demande: 02.01.2002
(73) Titulaire: Atofina, 92800 Puteaux (FR)
(72) Inventeur: FAULHAMMER, Heike, F-27300 Bernay (FR); BIENSAN, Michel, F-64140 Lons (FR); VICTORIEN, Franck, F-14000 Caen (FR); VIVIER, Thierry, F-27470 Serquigny (FR)
(74) Mandataire: Neel, Henry
(86) Numéro de dépôt international: PCT/FR2000/000749
(87) Numéro de publication internationale: WO 2000/058387

(56) Documents cités:
- EP-A- 0 231 381
- EP-A- 0 491 043
- EP-A- 0 786 482
- EP-A- 0 786 485
- EP-A- 0 791 618
- EP-A- 0 872 508
- FR-A- 2 291 231

## Description

La présente invention concerne un procédé de polymérisation anionique de lactames en masse avec un système catalytique ayant une grande stabilité à température élevée. Ce procédé fonctionne en continu ou en discontinu, en effectuant la polymérisation du lactame en présence d'un polymère on obtient un alliage, on peut aussi opérer en présence de charges telles que des fibres de verre pour obtenir un matériau composite. Le système catalytique est un mélange d'une base forte suffisamment forte capable de donner un lactamate et d'un amide ou d'un bisamide. Ce système catalytique est mis en solution dans le lactame, s'agissant par exemple du lactame 12 cette solution est stable 24 heures à 160°C. Il suffit de chauffer entre 200 et 350 °C de préférence entre 230 et 300°C pour qu'il y ait polymérisation en quelques minutes.

### [L'art antérieur et le problème technique]

La demande de brevet BE 1 007 446 A3 publiée le 4 juillet 1995 décrit la polymérisation du caprolactame en présence de lactamate (de sodium ou de potassium), de fibres de poly ( p-phenylene terephtalamide ) (PPTA), et d'un produit choisi parmi (i) les polyisocyanates bloqués par des lactames et (ii) les acyllactames tels que par exemple le terephtaloyl biscaprolactame ou l'adipoyl biscaprolactame. Ces polyisocyanates bloqués et ces acyllactames sont des imides ou des bisimides et non pas des amides ou des bis amides.

L'ouvrage book of abstracts 212 ACS meeting (1996) au chapitre 19 pages 255 à 266 publié en 1998 par l'american chemical society décrit la polymérisation du caprolactame en présence de lactamate et de N-acyllactames, c'est le même procédé que dans l'art antérieur précédent. Ceci veut dire que les deux composants du système catalytique sont séparément mélangés avec le lactame et mis en contact dans le réacteur de polymérisation soit en batch, soit en continu. Ce procédé a comme inconvénient qu'il est demandé au niveau de procédé de doser précisément ces deux flux du mélange réactionnel afin d'obtenir un produit avec des caractéristiques souhaitées.

La demande EP 786 483 décrit la polymérisation de lactames à l'aide d'une solution d'un lactamate et d'un imide dans le lactame qu'on verse dans le lactame à polymériser. Ce système catalytique n'est pas stable, s'agissant du lactame 12 il réagit dès 175°C.

La demande FR 2 291 231 décrit la polymérisation des lactames en présence d'un système catalytique constitué (i) d'un produit choisi parmi le sodium, le potassium, les hydrures et les hydroxydes de métaux alcalins et (ii) d'un produit choisi parmi les isocyanates organiques, les urées, les amides, et les chlorures d'acides. L'exemple ne décrit que l'usage de l'hydrure de sodium et d'un promoteur sans en préciser le nom. L'extrudeuse est alimentée par le mélange de lactame d'hydrure et de promoteur à 170°C l'extrudeuse étant à 250°C. Il n'est rien écrit ou suggéré sur un stockage de cette solution de composition inconnue et encore moins sur sa stabilité.

Le brevet FR 1 565 240 décrit la polymérisation du lactame 12 dans le toluène à l'aide de methylate de sodium et d'un amide tel que l'acetanilide. La réaction se fait dans un tube de verre chauffé à 197°C.

### [Brève description de l'invention]

La demanderesse a maintenant mis au point un nouveau procédé de polymérisation anionique de lactames dans lequel:
(a) on met en solution dans le lactame fondu (i) un catalyseur capable de créer un lactamate et (ii) un régulateur choisi parmi les amides de formule R1-NH-CO-R2 dans laquelle R1 peut être substitué par un radical R3-CO-NH- ou R3-O- et dans laquelle R1, R2, R3 désignent un radical aryle, alkyle ou cycloalkyle; La température de ce mélange réactionnel étant comprise entre la température de fusion du lactame et 15°C au dessus,
(b) la solution de l'étape (a) est introduite dans un dispositif mélangeur puis est chauffée à une température suffisante pour obtenir la polymérisation en masse du lactame en 15 minutes au plus.

Les inventeurs ont découvert que cette solution de l'étape (a) était particulièrement stable.

Selon une deuxième forme de l'invention on introduit aussi dans l'étape (b) du lactame fondu ne contenant pas le mélange de catalyseur et de régulateur c'est à dire que la solution de l'étape (a) est un mélange maître, elle contient plus de catalyseur et de régulateur qu'il n'est nécessaire pour polymériser le lactame dans lequel ils sont dissous.

Selon une troisième forme de l'invention la polymérisation du lactame s'effectue en présence d'un ou plusieurs polymères (A) qu'on introduit soit dans la solution (a) soit dans le dispositif mélangeur de l'étape (b) soit dans le lactame fondu qu'on ajoute en plus selon la deuxième forme de l'invention soit selon une combinaison quelconque de ces possibilités.

Selon une quatrième forme de l'invention la polymérisation du lactame s'effectue en présence d'une ou plusieurs charges qu'on introduit soit dans la solution (a) soit dans le dispositif mélangeur de l'étape (b) soit dans le lactame fondu qu'on ajoute en plus selon la deuxième forme de l'invention soit selon une combinaison quelconque de ces possibilités. On peut aussi combiner la troisième et la quatrième forme de l'invention.

Selon un deuxième mode de réalisation de l'invention l'étape (b) est remplacée par l'étape (b1) dans laquelle la solution de l'étape (a) est introduite dans un moule puis est chauffée à une température suffisante pour obtenir la polymérisation en masse du lactame en 15 minutes au plus, on obtient ainsi directement un objet en polyamide (technologie dite "RIM"). Ce deuxième mode peut aussi s'effectuer selon plusieurs formes comme ci dessus.

Selon une deuxième forme du deuxième mode on ajoute du lactame fondu ne contenant ni catalyseur ni régulateur dans l'étape (b1) en plus de la solution de l'étape (a) qui est un mélange maître, ce lactame fondu est éventuellement mélangé en ligne avec celui provenant de l'étape (a) avant introduction dans le moule.

Selon une troisième forme du deuxième mode la polymérisation du lactame s'effectue en présence d'un ou plusieurs polymères (A) qu'on introduit soit dans la solution de l'étape (a) soit dans le moule soit dans le lactame fondu qu'on ajoute dans la deuxième forme en plus de celui provenant de (a) soit encore lors du mélange en ligne dans cette deuxième forme soit une combinaison de toutes ces possibilités.

Selon une quatrième forme du deuxième mode la polymérisation du lactame s'effectue en présence d'une ou plusieurs charges qu'on introduit soit dans la solution de l'étape (a) soit dans le moule soit dans le lactame fondu qu'on ajoute dans la deuxième forme en plus de celui provenant de (a) soit encore lors du mélange en ligne dans cette deuxième forme soit une combinaison de toutes ces possibilités. On peut aussi combiner la troisième et la quatrième forme de l'invention.

### [Description détaillée de l'invention]

**A titre d'exemple de lactames** on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame. L'invention est particulièrement utile pour le caprolactame et le lauryllactame.

**Le catalyseur** est une base suffisamment forte pour créer un lactamate. A titre d'exemple de catalyseur on peut citer le sodium, le potassium, les hydrures et les hydroxydes de métaux alcalins, les alcoolates de métaux alcalins tels que le méthylate ou l'éthylate de sodium.

**S'agissant du régulateur** et des radicaux R1, R2, R3 des exemples de radicaux aryles peuvent être le phényle, le para-tolyle, l'alpha-naphtyle. Des exemples d' alkyles peuvent être de radicaux méthyle, éthyle, n-propyle, et n-butyle, et un exemple d'un radical cycloalkyle est le cyclohexyle.

Les amides préférés sont ceux dans lesquels R1 et R2 identiques ou différents est le phényle ou un alkyle ayant au plus 5 atomes de carbone, R1 pouvant être substitué par R3-O- et R3 étant un alkyle ayant au plus 5 atomes de carbone.On peut citer par exemple l'acétanilide, le benzanilide, le N-méthyl-acetamide, le N-éthyl-acetamide, le n-méthyl-formamide et le (4-éthoxy-phényl)acétamide. D'autres amides préférés sont les alkylènes bis amides tels que l'éthylène bis stéaramide (EBS) et l'éthylène bis oléamide.

Le rapport du catalyseur sur le régulateur, en moles, peut être compris entre 0,5 et 2 et de préférence entre 0,8 et 1,2. Pour le régulateur il s'agit du nombre de moles de groupements amides.

La proportion de catalyseur dans le lactame peut être comprise entre 0,1 et 5 moles pour 100 moles de lactame et de préférence entre 0,3 et 1,5. S'agissant de la première forme de l'invention, du premier ou du deuxième mode, ce sont ces proportions de catalyseur et de régulateur qui sont dans le lactame de l'étape (a). S'agissant de la deuxième forme de l'invention, du premier ou du deuxième mode c'est à dire si la solution de l'étape (a) est un mélange maître, les proportions dans la solution de l'étape (a) sont plus élevées mais on respecte ces proportions (0,1 à 5 pour 100 moles de lactame) par rapport à tout le lactame engagé dans la polymérisation à l'étape (b) ou (b1). Avantageusement la proportion de catalyseur dans cette solution de l'étape (a) considérée comme mélange maître est comprise entre 5 et 50 moles pour 100 moles de lactame. Quant aux autres formes de l'invention, du premier ou du deuxième mode, on respecte ces proportions (0,1 à 5 pour 100 moles de lactame) par rapport à tout le lactame engagé dans l'étape (b) ou (b1).

Le catalyseur et le régulateur sont ajoutés dans le lactame fondu préalablement déshydraté et inerté. La température de la solution stable de l'étape (a) est en général comprise entre la température de fusion et 15°C au-dessus. S'agissant du lactame 12 cette température est comprise entre 155 et 180°C et de préférence entre 160 et 170°C. On opère à la pression atmosphérique, il n'est pas nécessaire de compliquer les appareillages puisque la pression est sans effet sur la polymérisation. On peut par contre effectuer des distillations sous vide pour déshydrater le lactame, éventuellement le catalyseur et le régulateur.

Dans l'étape (b) ou (b1) le lactame, le catalyseur, le régulateur et éventuellement le polymère (A) et/ou les charges sont portés à une température suffisante pour obtenir la polymérisation en masse de tout le lactame. Plus cette température est élevée plus la réaction est rapide. Par exemple pour le lactame 12 cette température est comprise entre 200 et 350°C et de préférence entre 230 et 300°C. S'agissant du caprolactame cette température est comprise entre 200 et 350°C et de préférence entre 230 et 300°C. Il est recommandé que la température qu'on choisit pour la polymérisation soit supérieure à la température de fusion du polymère obtenu. La durée de la polymérisation est en général inférieure à 15 minutes et en général de l'ordre de 2 à 5 minutes. L'étape (b) peut s'effectuer dans tout dispositif de réacteurs continus utilisés pour la polymérisation à l'état fondu tel qu'un malaxeur ou une extrudeuse. L'étape (b1) est effectuée dans les dispositifs habituels de la technologie "RIM".

La troisième forme de l'invention, du premier ou du deuxième mode, est particulièrement utile pour préparer des mélanges (ou alliages) de polymères. En polymérisant le lactame en présence du polymère (A) on obtient un mélange beaucoup plus intime du polylactame (polyamide) et du polymère (A) que par le procédé habituel de mélange (ou malaxage) à l'état fondu du polymère (A) et du polyamide. Il en est de même dans la quatrième forme de l'invention, du premier ou du deuxième mode, ou il en résulte un meilleur contact entre le polyamide et les charges. Le polymère (A) peut être en partie solubilisé dans le lactame ou introduit dans le dispositif de l'étape (b) ou (b1) à l'état fondu ou sous forme solide finement divisée (entre 0,1 et 10 µm par exemple). On ne sortirait pas du cadre de l'invention en utilisant plusieurs polymères (A).

**A titre d'exemple de polymère (A)** on peut citer les polyoléfines éventuellement fonctionnalisées, les polyamides, le polyphenylène oxyde. S'agissant du polymère (A) qui est une polyoléfine elle peut être fonctionnalisée ou non fonctionnalisée ou être un mélange d'au moins une fonctionnalisée et/ou d'àu moins une non fonctionnalisée. Pour simplifier on a décrit ci dessous des polyoléfines fonctionnalisées (A1) et des polyoléfines non fonctionnalisées (A2).

Une polyoléfine non fonctionnalisée (A2) est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène.
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée (A1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (A2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (A1) peut être choisie parmi les (co)polymères suivants, greffés avec anhydride maléique ou méthacrylate de glycidyle, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères.

La polyoléfine fonctionnalisée (A1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (A1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (A1) ou (A2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Les copolymères mentionnés ci-dessus, (A1) et (A2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader®de la Demanderesse ou des polyoléfines greffées par de l'anhydride maléique comme les Orevac®de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le lactame peut être le caprolactame ou le lauryllactame ou leur mélange, le polymère (A) peut être le PA 6 ou le PA 12. On peut utiliser toute combinaison de ces possibilités.

A titre d'exemple de charge dans la quatrième forme de l'invention, du premier ou du deuxième mode, on peut citer les fibres de verre ou de carbone.

Les polyamides de l'invention peuvent aussi contenir des additifs tels que:
- des colorants ;
- des pigments ;
- des azurants ;
- des anti-oxydants ;
- des stabilisateurs UV.
Ces additifs pouvant être introduits au cours de la polymérisation pourvu qu'ils soient inertes vis à vis de la polymérisation anionique des lactames.

Dans les exemples suivants on caractérise les polyamides obtenus par leur viscosité inhérente. La viscosité inhérente (η) est mesurée par viscosimètre UBBELHODE à 25°C dans le metacresol pour 0,5 g de polymère dans 100 ml de metacresol. Ce principe est décrit dans ULLMANN'S Encyclopedia of Industrial Chemistry - Vol. A 20, p. 527 - 528 (1995 - 5e édition).

On caractérise aussi les polyamides par mesure de leur masse qu'on mesure par GPC (gel permeation chromatography) aussi appelée SEC (steric exclusion chromatography). Dans la présente demande le terme SEC désigne la mesure des masses moléculaires de polymères par chromatographie d'exclusion stérique. Cette technique, et plus particulièrement son application aux polyamides et aux polyamides blocs polyethers est décrite dans "Journal of Liquid Chromatography, 11 (16), 3305-3319 (1988)".

### [Exemples]

### Exemple 1

On essaie différents régulateurs.

### Mode opératoire:

### 1. Préparation du mélange réactionnel

Le lactame 12 sodé à 25% molaire est préparé préalablement de la façon suivante:
- environ 20% d'une certaine quantité de lactame 12 sont distillés sous azote et sous vide de façon à en assurer la déshydratation.
- 25% molaires de sodium sont introduits par petites quantités dans la partie non distillé du lactame. Cette addition se fait sous balayage d'azote et sous agitation, à une température inférieure à 100°C.

### 2. Polymérisation:

Le mélange est inerté et porté à 260°C. La polymérisation débute par introduction de 1% molaire d'acétanilide.

### Résultats obtenus :

| **Régulateur (1% molaire) et 1% de NaH** | **Temps de polymérisation (Min)** | **visco.inh. (0.5% en poids dans le m- crésol)** |
|---|---|---|
| acétanilide | 11.87 | 1.2 |
| 4-éthoxy-phényl)acétamide | 12.27 | 1.18 |
| benzanilide | 12.6 | 1.15 |
| N-méthyl-acétamide | 12.4 | 1.24 |
| N-éthyl-acétamide | 13.41 | . 1.3 |
| N-méthyl-formamide | 11.94 | 1.45 |

**Essais à 270°C**

### Mode opératoire

L'acétanilide ou le N,N' éthylène bis stéaramide, le NaH et le L12 respectivement L6 sont pesés dans un réacteur et inertés. Les mélanges réactionnels L6 et L12 sont préparés à 160 °C. Le début de la réaction se fait par chauffage à 270°C. Le temps de polymérisation donné est le temps de montée en couple :

| **Régulateur (x% molaire) et x% de NaH** par rapport au lactame | **Temps de polymérisation (Min)** | **visco.inh. (0.5 % en poids dans le m- crésol)** | **Lactame** |
|---|---|---|---|
| acétanilide (0.96/0.96) | 2-3 | 1.22 | L12 |
| éthylène bis stéaramide (0.48/0.97) | 2-3 | 1.1 | L12 |
| éthylène bis stéaramide (0.19/0.37) | 2-3 | 1.1 | L6 |
| Acétanilide : 1 fonctionnalité par mol | | | |
| EBS : 2 fonctionnalités par mol | | | |

### Exemple 2

On montre la stabilité de la solution (a)

### A- Mélange acétanilide / NaH / L12.

### Mode opératoire (maintien à 160°C) :

L'acétanilide, le NaH et le L12 (lactame 12) sont pesés dans un réacteur inerté. Le mélange est porté et maintenu à 160°C sous atmosphère anhydre. Le taux de L12 a été évalué par chromatographie.

| durée essais stabilité 160°C. | %L12 résiduel | % molaire par rapport au lactame acét./HNa |
|---|---|---|
| (2h) | 98.1 | 0.98 / 1.1 |
| (4h) | 96.1 | 0.95 / 1.06 |
| (7h) | 97.9 | 0.95 / 1.06 |
| (24h) | 99.2 | 0.95 / 1.06 |
| (48h) | 49.1 | 1.1 / 1.1 |

### B- Mélange N,N' éthylène bis stéaramide (EBS).

### Mode opératoire (maintient à 160°C) :

L'EBS, le NaH et le L12 (L6) sont pesés dans un réacteur inerté. Le mélange est porté et maintenu à 160°C sous atmosphère anhydre. Après le taux de L12 (L6) a été évalué.

| durée essais stabilité 160°C. | % Lactame résiduel | % molaire par rapport au Lactame EBS / HNa | Lactame |
|---|---|---|---|
| (24h) | 92 | 0.57 / 1.1 | L12 |
| (24h) | 98 | 0.55 / 1.0 | L6 |
| EBS = Ethylène bis stearamide : 2 fonctionnalités par mol | | | |

On montre maintenant la réactivité après le stockage.

### Mode opératoire: préparation de l'acétanilide sodé.

Dans un ballon de 6I à 3 tubulures muni d'une agitation puissante, d'un séparateur d'eau et contenant 4I de benzène, on verse 40g de soude finement pulvérisée. On maintient l'ébullition de façon à entraîner les trace d'eau éventuelles, puis on ajoute 135g (1 mole) d'acétanilide. L'avancement du déplacement d'équilibre est suivi par la quantité d'eau entraînée par le benzène. On récupère ainsi dans le séparateur d'eau 92 à 94% de la quantité théorique en 8 heures environ.
Le benzène est évaporé à 60°C / 20mm, puis à 60°C / 0.5 mm.
Le spectre infrarouge de l'acétanilide sodé présente une bande intense caractéristique de la structure [N-C=O]- Na+ à 1563 cm-1. Il ne subsiste qu'un léger épaulement à 1665 cm-1 caractéristique du carbonyle libre de l'acétanilide. Il y a disparition de la bande NH à 3400 cm-1. On peut donc évaluer à moins de 5% la quantité d'acétanilide libre restant dans l'acétanilide sodé par cette méthode.

### Mode opératoire: Stabilité du mélange réactionnel puis sa réactivité

### Série a :

Une série de tubes contenant du lactame 12 et 1 % molaire d'acétanilide sodé a été chauffé à 165°C. Le lactame 12 des échantillons a été extrait de la façon suivante: extraction de l'échantillon en Soxhlet pendant 2 heures à l'éthanol, suivie d'un étuvage pendant 16 heures à 150°C / 0.3mm
Le démarrage de la polymérisation n'a lieu qu'après 32 heures et son évolution est très lente.
2 tubes maintenus à 165°C pendant 64 heures ont été chauffés à 270°C. La polymérisation a eu lieu normalement pour conduire à un PA de visco.inh.=1.28.

### Série b :

Le mélange réactionnel en utilisant le L12 est fondu à 160°C, maintenu à cette température avec différentes durées, puis la polymérisation se fait en augmentant la température à 270°C.

| Réf. essais | visco.inh | GPC | | | CPG: | % molaire régulateur./naH par rapport à 100 mol Lactame |
|---|---|---|---|---|---|---|
| | | Mw | Mn | Ip | | |
| Essais réactivité (160°C puis 270°C) | dl/g | g/mol | g/mol | | % L12 résiduel | |
| Acétanilide | | | | | | |
| (1h) | 1.18 | 25120 | 11260 | 2.25 | 0.19 | 1.1/1.1 |
| (6h) | 1.18 | 25230 | 10730 | 2.35 | 0.2 | 1.1/1.1 |
| (22h45) | 1.15 | 24510 | 11170 | 2.2 | 0.22 | 1.1/1.1 |
| (48h) | 1.11 | 23200 | 9175 | 2.55 | 0.25 | 1.1/1.1 |

| EBS | | | | | | |
|---|---|---|---|---|---|---|
| (30 min) | 1.1 | 19200 | 9000 | 2.15 | 0.19 | 0.48/0.97 |
| (6h) | 1.08 | 17800 | 7700 | 2.3 | 0.16 | 0.57/1.1 |
| Acétanilide : 1 fonctionnalité par mol | | | | | | |
| EBS = Ethylène bis stearamide : 2 fonctionnalités par mol | | | | | | |

### Exemple 3

### Polymérisation en batch selon différents modes opératoires

### Mode opératoire:

Le lactame 12 sodé à 25% molaires est préparé préalablement de la façon suivante:
- environ 20% d'une certaine quantité de lactame 12 sont distillés sous azote et sous vide de façon à en assurer la déshydratation.
- 25% molaires de sodium sont introduits par petite quantités dans la partie non distillé du lactame. Cette addition se fait sous balayage d'azote et sous agitation, à une température inférieure à 100°C.

### Polymérisation:

Le mélange est inerté et porté à 260°C. La polymérisation débute par introduction de 1% molaire d'acétanilide.

| **Régulateur (1% molaire) et 1% de NaH** | **Temps de polymérisation (min.)** | **visco.inh. (0.5% en poids dans le m- crésol)** |
|---|---|---|
| acétanilide | 11.87 | 1.2 |

### Mode opératoire « polymérisation directe » à 270°C:

L'acétanilide ou le N,N' éthylène bis stéaramide, le NaH et le L12 sont pesés dans un réacteur et inertés. Le début de la réaction se fait par chauffage à 270°C.

| Tableau d'essais à 270°C. | | | | | | | |
|---|---|---|---|---|---|---|---|
| Régulateur | % molaire par rapport à L6 resp. L12 | | GPC | | | Viscosité inhérente | % massique L12/L6 |
| | | | Mw | Mn | Ip | | |
| | HNa | régulateur | g/mol | g/mol | | dl/g | |
| Acét | 0.63 | 0.97 | 34150 | 13000 | 2.6 | 1.26 | 100/0 |
| Acét | 1 | 0.97 | 28550 | 13100 | 2.2 | 1.25 | 100/0 |
| EBS | 1 | 0.57 | 17300 | 7300 | 2.35 | 1.03 | 100/0 |
| EBS | 0.65 | 0.32 | 30200 | 12600 | 2.4 | 1.41 | 100/0 |
| EBS | 0.38 | 0.19 | 25700 | 12900 | 2.0 | - | 0/100 |
| EBS | 0.47 | 0.24 | 30900 | 17700 | 1.75 | 1.32 | 50/50 |
| EBS | 0.51 | 0.25 | - | - | - | 1.25 | 60/40 |
| EBS | 0.54 | 0.27 | 11600 | 22900 | 2.0 | 1.19 | 70/30 |
| EBS | 0.57 | 0.29 | 13700 | 27500 | 2.0 | 1.20 | 80/20 |
| EBS | 0.61 | 0.31 | 17500 | 33100 | 1.9 | 1.44 | 90/10 |
| Acét = Acétanilide : 1 fonctionnalité par mol | | | | | | | |
| EBS = Ethylène bis stearamide : 2 fonctionnalités par mol | | | | | | | |

### Mode opératoire pour 30 kg du L12 :

Le mélange L12+régulateur est fondu à 160°C (mélange préalablement inerté), puis le NaH est introduit, après quoi le mélange est porté aux températures figurant ci-après:

| % molaire par rapport au Lactame acét./HNa | visco. inh. | GPC | | | % L12 résiduel | T °C matière |
|---|---|---|---|---|---|---|
| | | Mw | Mn | Ip | | |
| 1/1 | 1.17 | 28600 | 14000 | 2.05 | 0.13 | 222 |
| 1/1 | 1.17 | 27400 | 12700 | 2.16 | 0.2 | 223 |
| 1/1 | 1.18 | 27100 | 13000 | 2.1 | 0.15 | 230 |
| 1.6/1.6 | 0.86 | 18300 | 8800 | 2.09 | 0.13 | 226 |
| 1/1 | 1.2 | 26600 | 12000 | 2.24 | 0.15 | 246 |
| 1.28/1.28 | 0.97 | 22200 | 10200 | 2.17 | 0.13 | 232 |
| 2/1 | 1.25 | 27400 | 13200 | 2.05 | 0.28 | 235 |
| 2/1 | 1.08 | 19700 | 9600 | 2.05 | 0.33 | 252 |
| 2/1 | 1.32 | 25900 | 12900 | 2 | 0.16 | 240 |
| 2/1 | 1.1 | 20800 | 10600 | 1.95 | 0.23 | 242 |
| 2/1 | 1.2 | 25100 | 12400 | 2 | 0.44 | 234 |
| 2/1 | 1.18 | 20300 | 10700 | 1.9 | 0.54 | 234 |
| Acét = Acétanilide : 1 fonctionnalité par mol | | | | | | |
| EBS = Ethylène bis stearamide : 2 fonctionnalités par mol | | | | | | |

### Exemple 4

### Alliages par polymérisation

### a ) Lotryl 35BA320 (coploymère éthylène acrylate de butyle à 33-37% % d'acrylate et de MFI 260-350

Le mélange (L12 + Acétanilide + NaH + Lotryl) est inerté, fondu à 160°C puis homogénéisé. Par augmentation de la température à 270 °C la polymérisation est lancée.
Le rapport L12/Acétanilide resp. NaH est de 1 mol %.
La taux du L12 résiduel est de ∼ 0.2 %.

| **Produit** | **Analyse par GPC** | | |
|---|---|---|---|
| | **Mn** | **Mw** | **IP** |
| | g/mol | g/mol | |
| PA12 | 10000 | 25200 | 2.5 |
| PA12 + 10% Lotryl | 8900 | 24000 | 2.65 |
| PA12 + 20% Lotryl | 5700 | 18000 | 3.25 |

### b ) PPE

Le mélange (L12 + Acétanilide + PPE) est inerté, mise à 270 °C puis homogénéisé. Dans ce mélange le NaH est introduit et la polymérisation a lieu aussitôt.
Le rapport L12/Acétanilide resp. NaH est de 1 mol %.
Mise en évidence de la polymérisation par augmentation du couple lors de la polymérisation.

### c) Fibres de verre

Le mélange (L12 + Acétanilide + NaH + Fibres de verre) est inerté , mise à 160 °C puis homogénéisé. Par augmentation de la température à 270 °C la polymérisation est lancée.
Le rapport L12/Acétanilide resp. NaH est de 1 mol %.
Mise en évidence de la polymérisation par augmentation du couple lors de la polymérisation.

### Exemple 5

### 4. Polymérisation en extrudeuse

a ) Le mélange réactionnel (L12+ 0.65 mol% Acétanilide+ 0.65 mol % NaH, avec Acétanilide : 1 fonctionnalité par mol) est préparé à 160 °C dans 2 réacteurs dans une atmosphère inerte et anhydre.
   Ce réacteur alimente ensuite dans une façon alternée via une ligne de transfert un réacteur continu adapté (ici extrudeuse Wemer 30 équipé ou non d'un pompe a engrenage en aval ou équipé ou non d'un pompe doseuse en amont) où la polymérisation a lieu à une température entre 230 et 295 °C.
   Le procédé est stable pendant 100 heures.
   La viscosité inhérente dans le m-cresol à 0.5 % est entre 1.40 et 1.50 dl/g.
b ) Le mélange réactionnel (L12+ 0.51 mol% EBS + 1.0 mol % NaH resp. L12+ 0.25 mol% EBS + 0.50 mol % NaH, avec EBS : 2 fonctionnalités par mol) est préparé à 160 °C dans un réacteur dans un atmosphère inerte et anhydre.
   Ce réacteur alimente ensuite via une ligne de transfert un réacteur continu adapté (ici extrudeuse Clextral BC21 équipée ou non d'un pompe a engrenage en aval ou équipée ou non d'un pompe doseuse en amont) où la polymérisation a lieu à une température entre 160 et 330 °C.
   La viscosité inhérente dans le m-cresol à 0.5 % et entre 1.09et 1.21 dl/g resp. 1.37 - 1.84 dl/g.

## Revendications

1. Procédé de polymérisation anionique de lactames dans lequel:
(a) on met en solution dans le lactame fondu (i) un catalyseur capable de créer un lactamate et (ii) un régulateur choisi parmi les amides de formule R1-NH-CO-R2 dans laquelle R1 peut être substitué par un radical R3-CO-NH- ou R3-O- et dans laquelle R1, R2, R3 désignent un radical aryle, alkyle ou cycloalkyle; cycloalkyle; La température de ce mélange réactionnel étant comprise entre la température de fusion du lactame et 15°C au dessus,
(b) la solution de l'étape (a) est introduite dans un dispositif mélangeur puis est chauffée à une température suffisante pour obtenir la polymérisation en masse du lactame en 15 minutes au plus.

2. Procédé selon la revendication 1 dans lequel on introduit aussi dans l'étape (b) du lactame fondu ne contenant pas le mélange de catalyseur et de régulateur.

3. Procédé selon l'une quelconque des revendications précédentes dans lequel la polymérisation du lactame s'effectue en présence d'un ou plusieurs polymères (A) qu'on introduit soit dans la solution (a) soit dans le dispositif mélangeur de l'étape (b) soit dans le lactame fondu qu'on ajoute en plus de celui de (a) soit selon une combinaison quelconque de ces possibilités.

4. Procédé selon l'une quelconque des revendications précédentes dans lequel la polymérisation du lactame s'effectue en présence d'une ou plusieurs charges qu'on introduit soit dans la solution (a) soit dans le dispositif mélangeur de l'étape (b) soit dans le lactame fondu qu'on ajoute en plus de celui de (a) soit selon une combinaison quelconque de ces possibilités.

5. Procédé de polymérisation anionique de lactames dans lequel:
(a) on met en solution dans le lactame fondu (i) un catalyseur capable de créer un lactamate et (ii) un régulateur choisi parmi les amides de formule R1-NH-CO-R2 dans laquelle R1 peut être substitué par un radical R3-CO-NH- ou R3-O- et dans laquelle R1, R2, R3 désignent un radical aryle, alkyle ou cycloalkyle; cycloalkyle; cycloalkyle; La température de ce mélange réactionnel étant comprise entre la température de fusion du lactame et 15°C au dessus,
(b1) la solution de l'étape (a) est introduite dans un moule puis est chauffée à une température suffisante pour obtenir la polymérisation en masse du lactame en 15 minutes au plus.

6. Procédé selon la revendication 5 dans lequel on ajoute du lactame fondu ne contenant ni catalyseur ni régulateur dans l'étape (b1) en plus de la solution de l'étape (a) et ce lactame fondu est éventuellement mélangé en ligne avec celui provenant de l'étape (a) avant introduction dans le moule.

7. Procédé selon la revendication 5 ou 6 dans lequel la polymérisation du lactame s'effectue en présence d'un ou plusieurs polymères (A) qu'on introduit soit dans la solution de l'étape (a) soit dans le moule soit dans le lactame fondu qu'on ajoute en plus de celui provenant de (a) soit encore lors du mélange en ligne du lactame provenant de (a) et du lactame ajouté en plus de celui de (a) soit une combinaison de toutes ces possibilités.

8. Procédé selon l'une quelconque des revendications 5 à 7 dans lequel la polymérisation du lactame s'effectue en présence d'une ou plusieurs charges qu'on introduit soit dans la solution de l'étape (a) soit dans le moule soit dans le lactame fondu qu'on ajoute en plus de celui provenant de (a) soit encore lors du mélange en ligne du lactame provenant de (a) et du lactame ajouté en plus de celui de (a) soit une combinaison de toutes ces possibilités.

9. Procédé selon l'une quelconque des revendications précédentes dans lequel le catalyseur est choisi parmi le sodium, le potassium, les hydrures et les hydroxydes de métaux alcalins, les alcoolates de métaux alcalins tels que le méthylate ou l'éthylate de sodium.

10. Procédé selon l'une quelconque des revendications précédentes dans lequel le régulateur est choisi parmi l'acétanilide, le benzanilide, le N-méthyl-acetamide, le N-éthyl-acetamide, le n-méthyl-formamide, le (4-éthoxy-phényl)acétamide et les alkylènes bis amides tels que l'éthylène bis stéaramide (EBS) et l'éthylène bis oléamide.

11. Procédé selon l'une quelconque des revendications précédentes dans lequel le rapport du catalyseur sur le régulateur, en moles, est compris entre 0,5 et 2 et de préférence entre 0,8 et 1,2 ; le nombre de moles de régulateur étant exprimé en nombre de moles de groupements amides.

12. Procédé selon l'une quelconque des revendications précédentes dans lequel la proportion de catalyseur dans le lactame à l'étape (b1) est comprise entre 0,1 et 5 moles pour 100 moles de lactame et de préférence entre 0,3 et 1,5.

13. Procédé selon l'une quelconque de revendications précédentes dans lequel le lactame est le lauryllactame, la température de l'étape (a) est comprise entre 155 et 180°C et de préférence entre 160 et 170°C, la température de l'étape (b) ou (b1) est comprise entre 200 et 350°C et de préférence entre 230 et 300°C.

## Patentansprüche

1. Verfahren zur anionischen Lactampolymerisation, bei dem:
(a) man im geschmolzenen Lactam (i) einen Katalysator löst, der fähig ist, ein Lactamat zu schaffen, und (ii) einen Regulator, der unter den Amiden der Formel R1-NH-CO-R2 ausgewählt wird, wobei R1 durch einen Rest R3-CO-NHoder R3-O- ersetzt werden kann und wobei R1, R2, R3 einen Aryl-, Alkyl- oder Cycloalkyl; Cycloalkyl-Rest bezeichnen, wobei die Temperatur dieses Reaktionsgemischs zwischen der Schmelztemperatur des Lactams und 15 °C darüber liegt,
(b) die Lösung des Schritts (a) in eine Mischvorrichtung eingeführt und dann auf eine Temperatur erwärmt wird, die ausreicht, um die Massepolymerisation des Lactams innerhalb von maximal 15 Minuten zu erhalten.

2. Verfahren nach Anspruch 1, bei dem man auch im Schritt (b) geschmolzenes Lactam hinzufügt, das das Katalysator- und Regulatorgemisch nicht enthält.

3. Verfahren nach einem der vorhergehenden Ansprüche, bei dem die Lactampolymerisation in Anwesenheit eines oder mehrerer Polymere (A) erfolgt, die man entweder in die Lösung (a) oder in die Mischvorrichtung des Schritts (b) oder in das geschmolzene Lactam, das man zusätzlich zu dem von
(a) hinzufügt, oder nach einer Kombination dieser Möglichkeiten einführt.

4. Verfahren nach einem der vorhergehenden Ansprüche, bei dem die Polymerisation des Lactams in Anwesenheit einer oder mehrerer Chargen erfolgt, die man entweder in die Lösung (a) oder in die Mischvorrichtung des Schritts (b) oder in das geschmolzene Lactam einführt, das man zusätzlich zu dem von (a) hinzugefügt, oder nach einer beliebigen Kombination dieser Möglichkeiten.

5. Anionisches Verfahren zur Lactampolymerisation, bei dem:
(a) man im geschmolzenen Lactam (i) einen Katalysator löst, der fähig ist, ein Lactamat zu schaffen und (ii) einen Regulator, ausgewählt aus den Amiden der Formel R1-NH-CO-R2, wobei R1 durch einen Rest R3-CO-NH- oder R3-O-ersetzt werden kann und wobei R1, R2, R3 ein Aryl-, Alkyl- oder Cycloalkyl; Cycloalkyl; Cycloalkyl;-Rest bezeichnen, wobei die Temperatur dieses Reaktionsgemischs zwischen der Schmelztemperatur des Lactams und 15 °C darüber liegt,
(b1) die Lösung des Schritts (a) in eine Form eingeführt und dann auf eine Temperatur erwärmt wird, die ausreicht, um die Massenpolymerisation des Lactams innerhalb von maximal 15 Minuten zu erhalten.

6. Verfahren nach Anspruch 5, bei dem man geschmolzenes Lactam, das weder Katalysator noch Regulator enthält, in Schritt (b1) zusätzlich zur Lösung des Schritts (a) hinzufügt und dieses geschmolzene Lactam eventuell in Linie mit dem gemischt wird, das aus dem Schritt (a) vor dem Einführen in die Form stammt.

7. Verfahren nach Anspruch 5 oder 6, bei dem die Lactampolymerisation in Anwesenheit eines oder mehrerer Polymere (A) erfolgt, die man entweder in die Lösung des Schritts (a) oder in die Form oder in das geschmolzene Lactam, das man zusätzlich zu dem aus (a) stammenden hinzufügt oder auch beim Mischen in Linie des Lactams, das von (a) stammt und des Lactams, das zusätzlich zu dem von (a) hinzugefügt wird, einführt, oder eine Kombination aller dieser Möglichkeiten.

8. Verfahren nach einem der Ansprüche 5 bis 7, bei dem die Lactampolymerisation in Anwesenheit einer oder mehrerer Chargen erfolgt, die man entweder in die Lösung des Schritts (a) oder in die Form oder in das geschmolzene Lactam, das man zusätzlich zu dem aus (a) stammenden hinzufügt oder auch beim Mischen in Linie des Lactams, das aus (a) stammt und des Lactams, das zusätzlich zu dem von (a) hinzugefügt wird, einführt, oder eine Kombination aller dieser Möglichkeiten.

9. Verfahren nach einem der vorhergehenden Ansprüche, bei dem der Katalysator aus Natrium, Kalium, Alkalimetallhydriden und -hydroxiden, Alkalimetallalkoholaten, wie zum Beispiel Natriummethylat oder -ethylat ausgewählt wird.

10. Verfahren nach einem der vorhergehenden Ansprüche, bei dem der Regulator aus Acetanilid, Benzanilid, N-Methylacetamid, N-Ethylacetamid, N-Methylformamid, (4-Ethoxyphenyl)acetamid und den Alkylen-bis-amiden, wie zum Beispiel Ethylen-bis-Stearamid (EBS) und Ethylen-bis-oleamid ausgewählt wird.

11. Verfahren nach einem der vorhergehenden Ansprüche, wobei das Verhältnis des Katalysators zum Regulator in Mol zwischen 0,5 und 2 und vorzugsweise zwischen 0,8 und 1,2 liegt; wobei die Anzahl Mol des Regulators durch der Anzahl Mol von Amidgruppierungen ausgedrückt wird.

12. Verfahren nach einem der vorhergehenden Ansprüche, bei dem der Anteil des Katalysators im Lactam des Schritts (b1) zwischen 0,1 und 5 Mol pro 100 Mol Lactam und vorzugsweise zwischen 0,3 und 1,5 liegt.

13. Verfahren nach einem der vorhergehenden Ansprüche, bei dem das Lactam Lauryllactam ist, die Temperatur des Schritts (a) zwischen 155 und 180 °C liegt und vorzugsweise zwischen 160 und 170 °C, die Temperatur des Schritts (b) oder (b1) zwischen 200 und 350 °C und vorzugsweise zwischen 230 und 300 °C liegt.

## Claims

1. Process for the anionic polymerization of lactams, in which:
(a) (i) a catalyst capable of creating a lactamate and (ii) a regulator chosen from the amides of formula R1-NH-CO-R2, in which R1 can be substituted with a radical R3-CO-NH- or R3-O- and in which R1, R2 and R3 denote an aryl, alkyl or cycloalkyl radical, are dissolved in the molten lactam; the temperature of this reaction mixture being between the melting point of the lactam and 15°C higher,
(b) the solution from step (a) is introduced into a mixing device and is then heated to a temperature which is sufficient to obtain bulk polymerization of the lactam in no more than 15 minutes.

2. Process according to Claim 1, in which molten lactam not containing the mixture of catalyst and regulator is also introduced in step (b).

3. Process according to either of the preceding claims, in which the polymerization of the lactam is carried out in the presence of one or more polymers (A) which are introduced either into the solution (a) or into the mixing device in step (b) or into the molten lactam which is added in addition to that originating from (a) or according to any combination of these possibilities.

4. Process according to any one of the preceding claims, in which the polymerization of the lactam is carried out in the presence of one or more fillers which are introduced either into the solution (a) or into the mixing device in step (b) or into the molten lactam which is added in addition to that originating from (a) or according to any combination of these possibilities.

5. Process for the anionic polymerization of lactams, in which:
(a) (i) a catalyst capable of creating a lactamate and (ii) a regulator chosen from the amides of formula R1-NH-CO-R2, in which R1 can be substituted with a radical R3-CO-NH- or R3-O- and in which R1, R2 and R3 denote an aryl, alkyl or cycloalkyl radical, are dissolved in the molten lactam; the temperature of this reaction mixture being between the melting point of the lactam and 15°C higher,
(b1) the solution from step (a) is introduced into a mould and is then heated to a temperature which is sufficient to obtain bulk polymerization of the lactam in no more than 15 minutes.

6. Process according to Claim 5, in which molten lactam containing neither catalyst nor regulator is added in step (b1) in addition to the solution from step (a) and this molten lactam is optionally mixed in line with that obtained from step (a) before introduction in the mould.

7. Process according to Claim 5 or 6, in which the polymerization of the lactam is carried out in the presence of one or more polymers (A) which are introduced either into the solution from step (a) or into the mould or into the molten lactam which is added in addition to that originating from (a) or alternatively during the in-line mixing of the lactam originating from (a) and of the lactam added in addition to that originating from (a) or a combination of all these possibilities.

8. Process according to any one of Claims 5 to 7, in which the polymerization of the lactam is carried out in the presence of one or more fillers which are introduced either into the solution from step (a) or into the mould or into the molten lactam which is added in addition to that originating from step (a) or alternatively during the in-line mixing of the lactam originating from (a) and of the lactam added in addition to that originating from (a) or a combination of all these possibilities.

9. Process according to any one of the preceding claims, in which the catalyst is chosen from sodium, potassium, alkali metal hydrides and hydroxides, and alkali metal alkoxides such as sodium methoxide or ethoxide.

10. Process according to any one of the preceding claims, in which the regulator is chosen from acetanilide, benzanilide, N-methylacetamide, N-ethylacetamide, N-methylformamide, (4-ethoxyphenyl)-acetamide and alkylenebisamides such as ethylenebis-stearamide (EBS) and ethylenebisoleamide.

11. Process according to any one of the preceding claims, in which the ratio of the catalyst to the regulator, in moles, is between 0.5 and 2 and preferably between 0.8 and 1.2; the number of moles of regulator being expressed as the number of moles of amide groups.

12. Process according to any one of the preceding claims, in which the proportion of catalyst in the lactam in step (b1) is between 0.1 mol and 5 mol per 100 mol of lactam and preferably between 0.3 and 1.5.

13. Process according to any one of the preceding claims, in which the lactam is lauryllactam, the temperature of step (a) is between 155 and 180°C and preferably between 160 and 170°C, and the temperature of step (b) or (b1) is between 200 and 350°C and preferably between 230 and 300°C.
